# EUROPEAN PATENT APPLICATION

(11) **EP 1 722 322 A2**
(43) Date of publication of application: **15.11.2006**
(21) Application number: 06015005.9
(22) Date of filing: 12.07.2004
(51) Int. Cl.: G06Q 10/00, G06K 17/00

(54) **Systems for linking object identification data to package identification data**

(30) Priority: 10.07.2003 US 616770
(62) Divisional of application: 04778203.2
(71) Applicant: UNITED PARCEL SERVICE OF AMERICA, INC., Atlanta, Georgia 30328 (US)
(72) Inventor: Nonneman, Robert V., Norcross Georgia 30092 (US); Peters, Robert M., Atlanta Georgia 30338 (US)
(74) Representative: Chettle, Adrian John

(57) **Abstract**

Senders (15) ship products (21) in packages (13) to receivers (17) via a carrier (19). The carrier's computer system (2) receives data (23) identifying objects (20) associated with the products (21), and data (27) identifying the packages (13), links the two, and stores same in a database (29). The object (20) can be defined to be a product (21), package (13), or group of packages or objects. As the packages (13) progress through the carrier's transport and storage network (18), they pass through one or more portals (9) and are scanned to generate event data (31) transmitted to the computer system (2) for storage with the linked data to provide status information regarding the products (21) in the carrier's network (18).

## Description

### Background of the Invention

### 1. Field of the Invention

The invention relates to use of data used to identify products, known as "Universal Product Codes ("UPCs")" or "Electronic Product Codes" ("EPCs"). The invention also pertains to technologies for providing and scanning data on products, such as barcodes or radio-frequency identification (RFID) tags. Furthermore, the invention relates to shipment of packages containing products and related technologies.

### 2. Description of the Related Art

EPCs are identifiers that are associated with products, and are used to uniquely identify the products, much like serial numbers. EPCs can be provided on products in the form of optically-scannable indicia such as one- or two-dimensional barcodes, MaxiCode® indicia or other optically-readable forms. Alternatively, or in addition to use of optically-readable indicia, EPCs can be provided on products in electromagnetically-readable forms, such as in magnetic strips, radio-frequency identifiers (RFIDs), and the like.

Although there have been attempts to standardize use of EPCs in various industries, the fact remains that EPCs generally have no meaning to entities involved with the product outside of the entity that produced the EPC, normally the product manufacturer. Thus, if a manufacturer uses an EPC to designate a particular product, this code cannot generally be used by others involved with the product, such as the distributor, retailer, end user, recycler, etc., because these other entities are not generally equipped with appropriate equipment to read the manufacturer's EPCs. Even if such entities had the appropriate equipment, due to the lack of accepted standards, the data in the EPC generally could not be interpreted without further information from the entity that produced the EPC indicating the data protocol used in the EPC. Accordingly, important information such as the location of particular products in the commercial stream, shipment time of products from one location to another, inventories at points along the distribution chain and at retailer locations, the status and location of products returned by end users, and other information about the products, is generally lost by virtue of the fact that other entities in the commercial stream of the products do not generally have the equipment to scan the EPC codes on the products and provide the scanned data to other entities. It would be desirable to permit a manufacturer and other authorized entities involved in the supply or distribution chains related to the product with visibility as to the products' status as it progresses in its stream of commerce.

Package shipment carriers such as United Parcel Service ®, Inc. corporation currently provide tracking numbers for tracking packages shipped by a sender to a receiver using a carrier's shipping infrastructure. As presently implemented, each label used for shipping a package has a package identification number that identifies the package uniquely. A person, generally the package sender, can log in to a server application using a web browser, and enter the package identification number to determine the status of the shipment. However, the package identification number is not meaningful to the sender: it provides no information as to what product or object in the context of the sender's business is related to the corresponding package. This means that once the sender ships a package containing its product, visibility as to what the sender has shipped and the status of such packages during shipment is generally lost. This problem is greatly multiplied when the sender has products in numerous packages in transit to various receivers at any one time. Thus, there is a need for a technology that will enable a sender, and possibly other entities in the process such as a receiver, supplier, distributor, retailer, or end user, to have visibility to products during shipment from sender to receiver.

### Summary of the Invention

The invention, in its various embodiments, overcomes the disadvantages noted hereinabove with respect to previous technologies, and achieves advantages heretofore not possible.

A carrier computer system in accordance with one embodiment of the invention receives object identification data that uniquely identifies an object. An object can be one or more products, a box or container of products, or a certain number or lot of boxes or containers with products, and it can be defined by the sender in a context that is most useful to the sender in its business operations. The carrier computer system obtains package identification data that uniquely identifies a package to be transported from a sender to a receiver by using the shipping and storage infrastructure of a carrier. The carrier computer system links object identification data to package identification data. This linking makes it possible for the sender to track the object associated within the package within the infrastructure of the carrier that transports the package from the sender to the receiver. As the package passes through one or more portals within the carrier's network, the carrier computer system's scanner(s) associated with the portal(s) scan the package identification data and generate event data. The event data can comprise description data that describes the event, location data identifying where the event occurred, and date and time data indicating when the event occurred. This data can be reported from each portal's scanner to the carrier computer system for storage in association with the linked object identification data and package identification data as the package progresses through portal(s) of the carrier's transport and storage network 18. The data record of events related to the object can thus be obtained, optionally tagged, and uploaded to another computer system for access by computer systems of entities involved with the product, such as suppliers, manufacturers, distributors, retailers, end users, recyclers, etc., for more efficient operation of their businesses. Other related systems and articles are herein disclosed.

These together with other objectives and advantages of the invention will hereinafter be described in detail in connection with the following drawings in which like numbered elements refer to like parts throughout the several views.

### Brief Description of the Drawings

FIG. 1 is a block diagram of a system for linking product identification to package identification and for receiving and storing event data in association with such linked data as a package passes through portals of a carrier transport and storage network;
FIG. 2 is a more detailed block diagram of a system for linking object identification data to package identification data, and storing event data related to a package as it transits through one or more portals of the carrier computer system;
FIG. 3 is a first embodiment of a data flow diagram of the system for linking object identification data and package identification data, and for further storing event data related to the packaged products as the package transits through one or more portals of the carrier transport and storage network;
FIG. 4 is a second embodiment of a data flow diagram of the system for linking object identification data and package identification data, and for further storing event data related to the packaged products as the package transits through one or more portals of the carrier transport and storage network;
FIG. 5 is a diagram indicating data flow between a carrier computer system, object naming service (ONS) computer system, and physical mark-up language (PML) computer system in accordance with the invention;
FIG. 6 is a diagram showing event data and description data, location data, and date and time data, included therein;
FIG. 7 is a block diagram of a data storage unit containing a database with scanner or portal identification data listed in associate with event data, for
FIG. 8A - 8D is a flowchart of a method performed by a sender computer system to transport a package containing a product;
FIG. 9 is a flowchart of a method performed by a carrier computer system to link object identification data to package identification data, and to store event data related to the package and its products in association therewith;
FIG. 10 is a first relatively detailed embodiment of a method for storing object identification data in association with package identification data;
FIG. 11 is a second relatively detailed embodiment of a method for storing object identification data in association with package identification data;
FIG. 12 is a third relatively detailed embodiment of a method for storing object identification data in association with package identification data;
FIG. 13A is a first embodiment of a method performed by the object naming service (ONS) computer system to generate a network address of a physical markup language (PML) computer system using object identification data;
FIG. 13B is a second embodiment of a method performed by the object naming service (ONS) computer system to generate a network address of a physical markup language (PML) computer system using object identification data;
FIG. 14A is a method for storing object identification data, package identification data, event data, and corresponding tags in a PML computer system;
FIG. 14B is a method for handling a request to access object identification data, package identification data, and event data, with the PML computer system;
FIG. 15A - 15C are block diagrams of suppliers that can commercially interact with the sender computer system using the stored object identification data, package identification data, and event data;
FIG. 16 is a block diagram of a product manufacturer, retailer, distributor, supplier, recycler, end user and carrier, indicating how access to the object identification data, package identification data, and event data can be used in their business operations.

The invention is now described with reference to the accompanying drawings which constitute a part of this disclosure. In the drawings, like numerals are used to refer to like elements throughout the several views.

### Description of the Preferred Embodiments

As used herein, the following words have the following meanings:
"And/or" means either or both of the things immediately preceding and following.
"Application" is a computer program or code executed by a computer, that is designed to carry out a specific task(s).
"Browser Application" is software executed by a computer to access resources via the World Wide Web (WWW), WWW 2, WWW3, Internet, Internet2, Internet3 or other public networks. Microsoft® Explorer version 6.x and Netscape® version 7.x are examples of browser applications.
"Computer" can be any device capable of receiving input data, processing that data, and generating output data therefrom. The computer can be a mainframe, miniframe, server, personal computer (PC), or personal digital assistant (PDA), for example. Such computers can be obtained from numerous manufacturers, including Dell® Corporation, Round Rock, Texas; Hewlett-Packard ® Corporation; Palo Alto, California; Gateway® Corporation, San Diego, California; International Business Machines® Corporation, and numerous others.
"Computer system" refers to any network or other such system, that includes one or more computers and any associated data storage units.
"Data Storage Unit" or "Memory" refers to read-only memory (ROM), random-access memory (RAM), hard disk data storage unit, and other such devices.
"Entity" refers to any person, business, or organization involved in shipment of an object.
"Input Device" can be a keyboard, mouse, pen, stylus or other device used to input data into a computer.
"Object" can be a product, a group of products, a container or box of products, a palate or crate of boxes of products, or any other defined unit of product(s). The object is normally defined by the sender of a package, although this does not exclude the possibility of others defining what the object is.
"Operating System" enables a processor of a computer to communicate with other elements of a computer. The operating system can be DOS, Windows® 95, Windows® 98, Windows® 2000, Windows® NT, OS/2, OS/360, OS/400, iSeries, eSeries, pSeries, zSeries, UNIX, LINUX, and numerous others.
"Output Device" refers to a device such as a monitor, for generating a display of a computer.
"Package" is broadly defined herein to include any container that can contain a product. Package thus includes a box, envelope, mailer, tube, box, crate, trunk, palate, shipping container, or anything else that can be used to enclose a product(s) to transport it from one place to another.
"Product" is broadly defined to include any manufactured unit, optionally including a package or container therefor.
"(s)" after a word means one or more things defined by the word.

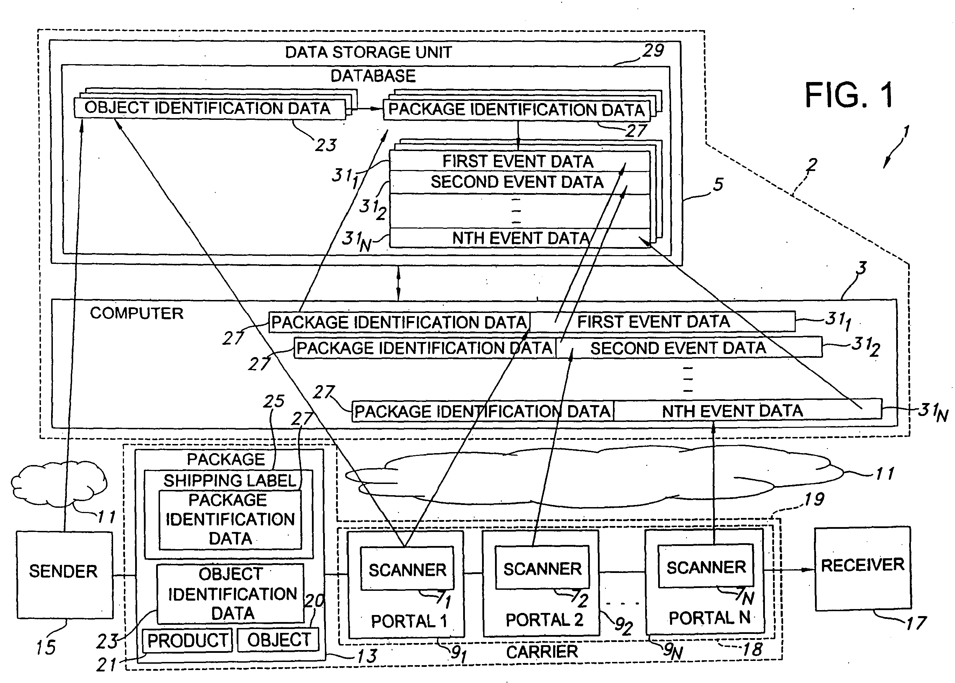

In FIG. 1, a system 1 of the invention is shown. The system 1 comprises a computer system 2 including computer 3 and a data storage unit 5. The system 1 can also comprise scanners 7₁, 7₂, ..., 7_{N} associated with respective portals 9₁, 9₂,..., 9_{N} way. The computer 3 can be connected to communicate with the scanners 7₁, 7₂, ..., 7_{N} of portals 9₁, 9₂,..., 9_{N} via the network 11. The portals 9₁, 9₂,..., 9_{N} are simply locations along the path of package 13 as it is transported from sender 15 to receiver 17 within the transport network of carrier 19. The portals 9₁, 9₂,..., 9_{N} can be located at points at which the carrier 19 receives the package 13 from the sender 15, at locations such as transport vehicles, warehouses, storage facilities, long-haul transportation vehicles such as ship, trailer truck, railroad, and aircraft, distribution centers or hubs, and/or at a location at which the receiver 17 takes delivery of the package. The portals 9₁, 9₂,..., 9_{N} can thus be at any location through which the package 13 transits from the sender 15 to the receiver 17. Normally, the portals 9₁, 9₂,..., 9_{N} are located within the facilities and possibly also the vehicles of the carrier 19, but there is no requirement for purposes of this disclosure that the portals be exclusively owned or operated by the carrier: other entities (or for that matter no entity) can be associated with the portal(s). As used herein, the subscript "N" represents positive integer equal to the number of portals through which the package 13 passes on its route from the sender 15 to the receiver 17.

The package 13 contains a product 21. In the specific example of FIG. 1, the package 13 containing the product 21 is defined as an object 20. Normally, the sender 15 of the package 13 defines what an object 20 is on the basis of how the sender's business is operated and controlled. For example, for relatively large products such as automobiles, computers, household appliances, etc., the sender 15 may track the products manufactured and shipped on the basis of the individual products 21. In this case, the object 20 can be defined to be associated directly with the product 21 so that the sender 15 can track the status of the products after providing them in packages 13 to the carrier 19 for shipment. As another example, which is the particular case of FIG. 1, the object 20 can be defined to be a package 13 of products 21. For smaller products such as razors, pencils, cans of paint, beverage, shaving cream, etc. it may be most useful to the sender-manufacturer 15 to define the objects 20 for tracking purposes to be associated with a package 13 of products 21. As yet another example, for relatively large scale shipments, it may be more desirable to the sender 15 to define an object 20 as a larger unit, such as a palate or trailer load of containers 13 with respective products 21. Thus, the definition of the object 20 can be varied so as to be useful to the sender 15 in tracking shipment of objects of interest to the sender in the way it manages and operates its business.

To be able to detect and identify the object 20 as it progresses through portals 9₁, 9₂,..., 9_{N} , object identification data 23 can be associated with the object 20. The object identification data 23 can be in an optically-scannable or electromagnetically-scannable format. It can be a sticker, tag, label, printing, chip or other such item affixed to the product 21. For example, the object identification data 23 can be in the form of a one- or two-dimensional bar code, a magnetic strip, RFID tag or chip, or other such item. Normally, it is the sender 15 that affixes the object identification data 23 to the object 20, although this does not exclude the possibility of other entities performing this function.

In FIG. 1, the product 21 is contained within the package 13 which is defined to be the object 20 in the specific example of FIG. 1. To route the package 13 from the sender 15 to the receiver 17, such package can be provided with a shipping label 25 with package identification data 27. The shipping label 25 is attached to the package 13 with tape, a self-adhesive backing, a pouch attached to the package, or through other means. The package identification data 27 uniquely identifies the package 13 with which it is associated for purposes of the carrier's shipment and storage infrastructure and computerized tracking system. The package identification data 27 can be included as pre-printed data or indicia (e.g., one- or two-dimensional barcode, Maxicode, magnetic strip, RFID, etc.) provided on the shipping label 25. Many carriers such as United Parcel Service, Inc. and others provide shipping labels 25 for their customers' use, each with unique package identification data 27 in the form of a serial number, for example.

Alternatively, UPSCampusShip™ or UPSInternet™ browser-accessible website services provide the capability to generate a shipping label 25 on-line. In this case, computer 3 of the carrier's computer system 2 interacts with the sender 15 over network 11 to generate a shipment label 25 with package identification data 27 thereon. The sender 15 downloads the shipment label 25 with package identification data 27 from the carrier computer system 2, outputs it with a printer 59, and attaches it to the package 13 for shipment.

As yet another alternative, the shipping label 25 and associated package identification data 27 can be generated by self-service equipment at a carrier store, and attached to the package 13. Regardless of the specific method by which the shipment label 25 and associated package identification data 27 are generated, the package identification data can be used for tracking the package 13 through the portals 9₁, 9₂, ..., 9_{N} as the carrier 19 receives the package from the sender 15, transports its through its internal transport and storage infrastructure 18, and delivers the package to the receiver 17. Many commercial package carriers use package identification data, or tracking numbers, to provide the ability to track packages both internally in their own operations, as well as externally so that customers can access the carrier's website to determine the status of a package. However, visibility to the sender 15 of the products sent in a package 13 is generally lost to the sender once the package 13 is provided to the carrier 19 for transport to the receiver 15.

Importantly, to overcome this problem, the computer 3 of the system 2 can link the package identification data 27 to the object identification data 23 identifying the product 21 in the package 13. The linked association between the object identification data 23 and the package identification data 27 can be stored by the computer 3 in a database 29 of the data storage unit 5. Linkage of the object identification data 23 and the package identification data 27 provides visibility to the sender 15 as to what objects 24 are being transported in the carrier's transport and storage network 18, and also the location and status of such objects. More specifically, as the package 13 is transported through the transport network 18 of the carrier 19, the package 13 passes through portals 9₁, 9₂, ..., 9_{N} along the way. The portals are located in the carrier transport and storage network 18 so that passage of the package 13 through a portal signifies a certain event. For example, the portals can be arranged in the transport network as shown in Table 1:

**Table 1. Portal Location and Associated Events**

| Portal | Location | Event |
|---|---|---|
| 1 | drop location | "package pick up" |
| | carrier store | (location) |
| | service center | (date: time) |
| | pickup vehicle | |
| | sender's location | |
| 2 | package intake of send distribution hub | "package received at pickup |
| | | distribution hub" |
| | | (location) |
| | | (date: time) |
| 3 | package outlet of send distribution hub | "package exited pickup |
| | | distribution hub" |
| | | (location) |
| | | (date: time) |
| 4 | package inlet to long-haul transport | "package on long-haul |
| | | transport" |
| | | (location) |
| | | (date: time) |
| 5 | package outlet to long-haul transport | "package off long-haul |
| | | transport" |
| | | (location) |
| | | (date: time) |
| 6 | package intake of receive distribution hub | "package arrived at receive |
| | | distribution hub" |
| | | (location) |
| | | (date: time) |
| 7 | package outlet of receive distribution hub | "package exited receive |
| | | distribution hub" |
| | | (location) |
| | | (date: time) |
| 8 | drop location | "package delivered" |
| | carrier store | (location) |
| | service center | (date: time) |
| | pickup vehicle | |
| | receiver's location | |

Thus, as shown in FIG. 1, as the carrier 19 transports the package 13 through its transport and storage network 18, the scanners 7₁, 7₂, ..., 7_{N} of the portals 9₁, 9₂, ..., 9N report respective event data 31₁, 31₂, ..., 31_{N} over network 11 to the computer 3 of the system 2. The package identification data 27 is preferably reported by the scanners 7₁, 7₂, ..., 7_{N} along with respective event data 31₁, 31₂, ..., 31_{N}, which enables the computer 3 of the system 2 to store such event data in association with the package identification data 27. Due to the association between the package identification data 27 and the object identification data 23, the events related to event data 31₁,31₂, ..., 31_{N} are linked to the object 20, in this case, the package 13. Thus, via the computer 3 and data storage unit 5, one can readily determine the status of the object 20 as it progresses through the carrier's transport network 18. Carrier personnel can use a computer network of which the computer 3 and data storage unit 5 can be a part, to determine package status. Also, the sender, receiver, or business partners such as suppliers or customers associated with the package 13, can access the computer 3 via network 11 using a computing device with a browser or other such application. This permits such entities to access the database 29 to determine the status of the object 20, in this case, package 13, as it is transported in the carrier's logistics network 19. This is made possible by the linking of the object identification data 23 that identifies the object 20 in the context used by the sender 15, to the package identification data 27 under which event data 21 is tracked by the carrier. Authorized entities can use this data to control their operations related to the products 21 associated with the object 20. This can involve control of the product inventory, ordering of supplies and resources needed to manufacture, contain, and ship the product, control of distribution and logistics for transporting the product, etc.

The object identification data 23 can be provided by the sender 15 to the carrier 19 over communications network 11. For example, if the sender 15 uses shipping labels 25 with pre-printed package identification data 27 and packs the product 21 in the package 13 itself before the carrier 19 receives the package, then the sender 15 can provide the package identification data 27 and the object identification data 23 to the carrier 19 via network 11. This can be done by the sender 15 uploading a data file containing one or more associated records of object identification data 23 to respective package identification data 27 to the computer 3 of system 2. Alternatively, the computer 3 can obtain the association of package identification data 27 to respective object identification data 23 if one or more of the scanners 7₁, 7₂, ..., 7_{N} are capable of reading both sets of data. For example, in FIG. 1, the scanner 7₁, the first to encounter the package 13 as it is shipped in the carrier's transport network 18, reports the object identification data 23 and package identification 27 to the computer 3 for storage in linked association in the database 29. By having the scanner 7₁ of the first portal 9₁ that encounters the package 13 and associated object 20 to report the object identification data 23 and package identification 27, this data can be linked so that it can be accessed by the sender 15 early in the process of shipping the package from the sender to the receiver 17. With either option, the computer 3 creates a record in its database that permits the computer to link event data 31₁, 32₂, ..., 31_{N} associated with the package identification data 27, to the respective object identification data 23. This provides the sender, and possibly others involved with the product, the ability to determine the status of the product 21 in package 13 as it is transported and/or stored in the carrier's transport network 18.

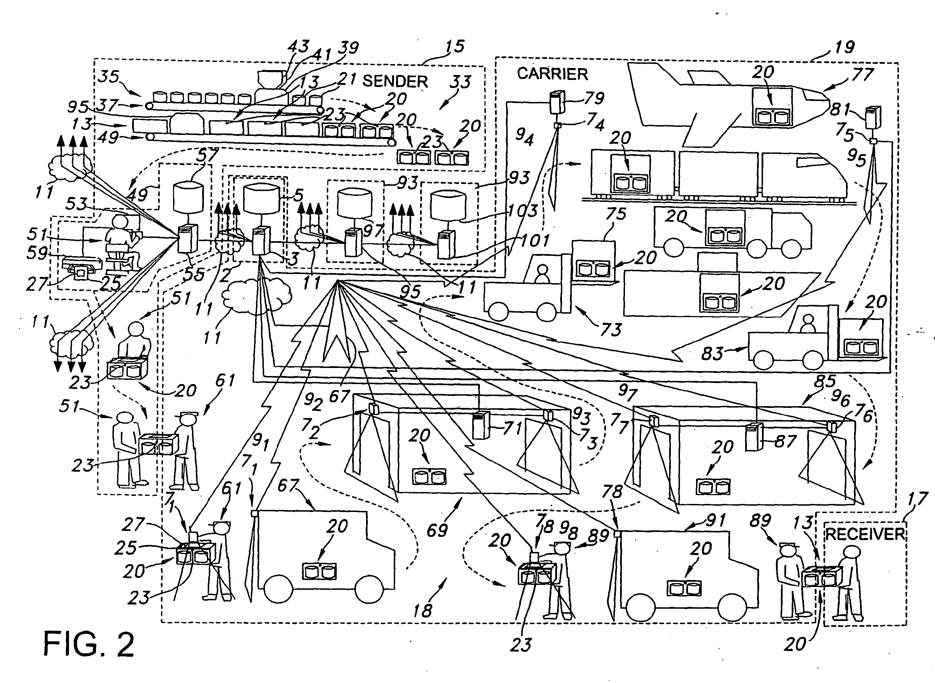

In FIG. 2, a more specific embodiment of the system 1 in accordance with the invention is shown. In the context of FIG. 2, the sender 15 is a manufacturer of product 21. The sender's operations include a production line 33. The production line 33 includes a conveyor 37 receiving containers 35 for holding the product 21. The containers 35 move on conveyor 37 through machine 39 which processes ingredients or materials 41, 43 to produce the product 21. The machine 21 fills the containers 35 with the product 21 and seals them. Moving on conveyor 49, boxes 13 pass through machine 45 that places object identification data 23 on such packages. The finished products 21 in containers 35 exit machine 39 and are loaded in boxes or packages 13 moving on conveyor 49. The finished packages 13 with respective contained products 21 are deemed by the sender 15 in this example to correspond to the objects 20 that the sender-manufacturer desires to track. Hence, the production line 33 generates a stream of objects 20 for shipment to receiver(s) 17. Thus, it will be appreciated that tracking the status of the objects 20 shipped to receiver(s) 17 is a considerable task due to the fact that, for a typical product manufacturer such as sender 15, numerous products and packages will be in production and shipment at the same time.

The shipping coordinator 51 operates unit 53. The coordinator 51 can use the unit 53 to generate a shipping label 25 with package identification data 27. As previously described, the process of generating a shipping label 25 can be performed in a variety of different ways. For example, the unit 53 can be a typewriter, word processor, or computer for producing the shipping label 25 by directly printing information such as the receiver's name and address on a shipping label pre-printed with package identification data 27 thereon. Alternatively, the unit 53 operated by coordinator 51 can be a computer running a web browser, enabling the coordinator to interact via sender computer 23 with computer 3 of carrier system 2 over network 11, optionally via computer 55 internal to the sender 14 that serves as a gateway or point-of-presence on network 11. The computer 55 can also be connected to data storage unit 57 which can store applications for implementing the business processes required for operation of the sender's manufacturing operations and business. In any case, through interaction of computer 53 accessing computer 3 to execute an application such as can be provided by UPSCampusShip™ or UPSInternet™ web-based services, the coordinator 51 can generate a shipping label 25 including package identification data 27. The computer 3 generates package identification data 27, incorporates same into an electronic shipping label 25 which is downloaded in "soft" form to the computer 53 via communications network 11. The coordinator 51 operates the computer 53 to output the shipping label 25 with package identification data 27 from printer 59. Shipping coordinator 51 affixes the shipping label 25 with package identification data 27 on the package 13 containing products 21. The shipping coordinator 51 then provides the package 13 to the carrier 19. This can be done by leaving the package at a drop location, carrier store, or service center for pick-up, by telephoning the carrier 19 to request pick-up at the sender's location, for example.

The package 13 transits through the portal 9₁, which can be associated with a hand-held or truck-mounted scanner 7₁ used to read package identification data 27, and optionally also object identification data 23. In addition, the scanner 7₁ and/or computer 3 can timestamp such data with data indicating the date and time of the corresponding event, in this case "package pickup." The event can either be explicitly designated by the worker 61 by inputting data indicating such event via the hand-held unit 7₁. Alternatively, the computer 3 can be programmed to determine that the event associated with the package identification data 27, and optionally also object identification data 23, is the first event 31 "package pickup" by virtue of the fact it is the first occasion on which the computer 3 has received the package identification data 27 uniquely associated with the package 13. As yet another alternative, in the case of dispatching a vehicle 67 to pickup the package 13, the computer 3 has stored data scheduling the pickup, and thus can determine that the scanned data is associated with the event "package pickup" by reference to this data stored in unit 5 in association with the package identification data 13. Other alternatives for identifying event data may occur to those of ordinary skill in this technology.

To provide a specific example associated with the "package pickup" event, at portal 9₁, worker 61 takes the package 13 and scans the shipping label 25, and more particularly, the package identification data 27, with the scanner 7₁ which generates a wireless signal provided to transceiver network 67. The transceiver network 67 can be a public or private network of cellular telephone or wireless transceivers, base stations, and switching offices, as is well-known in the telecommunications industry. Optionally, the scanner 7₁ can be equipped with an electro-magnetic reader that does not require line-of-sight, and is thus capable of reading the object identification data 21₁₁, 21₁₂ inside of the package 13₁. For example, although this is not the case in the example of FIG. 2, the object identification data 23 can be stored in RFID tags or chips on the product containers 35 that can be interrogated by scanner 7₁ to read such data. This provides the capability to read the object identification data 23 associated with the product even though such product is inside of the package 13. Thus, in other implementations, it can be possible for the sender 15 to associate the object 20 with the product 21, although in the example of FIG. 2, it is assumed that the sender 15 has taken the option of associated the object 20 with the package 13 of products 21 rather than the products themselves.

The scanner 63 scans and transmits the package identification data 35, optionally with object identification data 21, to the transceiver 67. Alternatively, the shipping label 25, and more specifically, its package identification data 27 can be read by scanner 65 provided on the back of delivery truck 67 as the package 13 is loaded therein. Scanner 7₁ can wirelessly transmit the package identification data 27, and optionally also the object identification data 23 if capable of reading it, to the transceiver network 67. The transceiver network 67 supplies the package identification data 27 and any accompanying object identification data 23 to the computer 3 which timestamps and stores such data in the data storage unit 5. Alternatively, the object identification data 23 can be provided to the computer 3 with associated package identification data 27 in a data file uploaded from the sender 15 with the computer 53 via network 11. The computer 3 stores the package identification data 27 in linked association with the object identification data 23. This enables the sender 15 to use the unit 53 of computer system 49 to access event data 31 pertaining to the object(s) 20 in which it is interested. This information is significantly valuable to the sender 15, in addition to others who may be involved with or interested in the product, including suppliers of materials required to make or contain the product, distributors, wholesalers, and retailers of the product, and analysts and consultants that may be interested in the product, and recyclers of the product or containers therefor.

The short-haul vehicle 67 proceeds to portal 9₂ at the entrance or intake side of distribution hub or warehouse 69. As the package 13 with contained products 21 passes within range of the scanner 7₂, its package identification data 27 is scanned and transmitted to the carrier's computer 3. This can be accomplished by wireless transmission via transceiver network 67 and network 11, if the scanner 7₂ is suitably adapted for this purpose, or alternatively, by a computer 71 associated with the distribution hub 69. The computer 71 is connected to the scanner 7₂ and the computer 3 via network 11, and can receive package identification data 27 scanned by the scanner 7₂ and transmit same to the computer 3 via the network 11. In addition, the scanner 7₂ can transmit data uniquely identifying the scanner 7₂ along with the package identification data 27₁. This could be an internet protocol (IP), media access control (MAC), data link control (DLC), or other address or data associated with the scanner 7₂ . Because the location of the scanner 7₂ is static in this case (i.e., fixed to the entrance of hub 69), the event data 31₂ associated with this scanner is invariant, "package received at pickup distribution hub." Thus, although the scanner 7₂ can be programmed to transmit data explicitly indicating the event data 31₂ , the computer 3 can alternatively be programmed to recognize the event data 31₂ associated with the portal 9₂ by virtue of data identifying the scanner 7₂ which is transmitted from such unit to the computer 3.
The object 20, which in this example is package 13 containing products 21, can be stored in the distribution hub 69 for virtually any length of time, as may be desired by the sender 15 and the receiver 17. The term of storage of the package can be for only so long as is necessary to arrange for transport the rest of the way to the receiver 17. Alternatively, the packaged products can be stored on a long-term basis from days to years, or until required by the receiver 17. Thus, in addition to service offering immediate shipment of the products, the hub 69 can serve as a warehousing capability provided by the carrier 13 for the sender 15 or receiver 17.

In any case, when it is desired to ship the package 13 to the receiver 17, the package transits through portal 9₃ at the exit to the hub facility 69. Vehicle 73 can be used to retrieve the package 13₁ from the hub facility 69. As the package 13₁ passes through portal 9₃, the scanner 7₃ positioned adjacent the hub exit scans the package identification data 27₁ and transmits this data to the computer 3, either wirelessly via networks 11, 69 or via computer 71. Computer 71 can be a dial-up client, gateway from a network internal to the hub facility, or a point-of-presence on the network 11. The scanner 7₃ can transmit identification data uniquely identifying itself to the computer 3. Because in this case the position of the scanner 7₃ is static at the exit door of the hub facility 69, the computer 3 can be programmed to recognize that the event data 31₃ associated with the portal 9₃ is "package exited pickup distribution hub" upon determining that the package identification data 27₁ has been reported by the scanner 7₃ by the data identifying such scanner. Upon receipt of such data, the computer 3 can timestamp the event data 31₃ so that it includes the date and time at which the package 13 exited distribution hub 69. Alternatively, the scanner 7₃ can explicitly generate and transmit event data 31₃ indicating the event, including data identifying the event and the location, date, and time thereof. The computer 3 thus receives and/or generates the event data 31₃ including the description, date, and time of the event is "package exited pickup distribution hub" and stores same in correspondence with the package identification data 27 in the data storage unit 5. Because the package identification data 27 is linked to the object identification data 21 , visibility as to the status of the package within the carrier network 19 is available to the sender 15, receiver 17, and/or others involved with the product.

For long-haul shipment, the package 13₁ can be placed in a shipment container 75 for protection and handling during shipment. The vehicle 73 then lifts the shipment container 75 with package 13₁ and loads same onto long-haul transport vehicle 77. The vehicle 77 can be an aircraft, train, trailer truck, waterborne vessel, or other means for transporting the shipment container 75 with package 13₁ over relatively long distances. As the package 13₁ is moved from hub facility 69 to be loaded on the vehicle 77, the package 13₁ passes through portal 9₄ and the package identification data 27₁ is scanned by scanner 7₄. The scanned data can be transmitted directly by wireless network 67 and/or network 11 to the computer 3. Alternatively, the scanner 9₄ can be connected to computer 74, which transmits such data to the computer 3 via network 11. In either case, the scanner 7₄ can also transmit data uniquely identifying such scanner. If the scanner 7₄ is fixed at a location, then the computer 3 can be programmed to retrieve data from the unit 5 which indicates that the event data 31₄ associated with portal 9₄ includes the description "package on long-haul transport" or the like along with the location. The computer 3 can also timestamp the package identification data 27 received from the scanner 7₄ with the date and time, and store in the storage unit 5 this data, along with the description data, as event data 31₄. Alternatively, any or all of the description data, location data, date and time data, can be generated by the scanner 7₄ and/or computer 79 and transmitted to the computer 3 for storage in the unit 5 in association with the package identification data 27.

The package 13 containing products 21 is transported on long-haul transport vehicle 77 to a location relatively near the receiver 17. As the package 13₁ is off-loaded from the vehicle 77, the package transits through portal 9₅ at which the scanner 7₅ scans the package identification data 27₁. As similarly described with respect to other portals and their scanners, scanner 7₅ transmits the scanned package identification data 27₁, optionally along with event data 31₅, wirelessly via networks 11, 67, or via computer 81 connected to scanner 7₅ and network 11, to provide such data to the computer 3. Alternatively, one or more items of the event data 31₅ can be generated by the computer 3 directly or by retrieving such data from the unit 5. The event data 31₅ generally comprises data identifying a description of the event, such as "package off long-haul transport," as well as other data such as the location at which the event occurred (i.e., the location of portal 9₅), and the date and time of the event. The computer 3 stores the event data 31₅ in association with the package identification data 27₁ as a part of the record pertaining to events related to the package 13₁ as it progresses through the transport and logistics network 18 of the carrier 19.

Vehicle 83 can be used to off-load the shipping container 75 holding package 13 from the long-haul transport vehicle 77. The vehicle 83 transports the package 13 to distribution hub 85 for temporary or long-term storage. As the package 13 transits through the portal 9₆ at which the scanner 7₆ is located, such scanner detects the package identification data 27 and transmits same to the computer 3. In addition, the scanner 7₆ can transmit to the computer 3 some or all of event data 31₆ including a description of the related event such as "package arrived at receive distribution hub," the date and time of the event, and the location of the event. Alternatively, either the scanner 7₆ or the computer 87 can generate and provide data uniquely identifying such units or one or more addresses associated therewith, to the computer 3. The computer 3 can use such data to generate some or all event data 31₆ by virtue of established association of such unit identity or address with data stored in the unit 5. The scanner 7₆ can transmit such data wirelessly via networks 11, 67. Alternatively, the scanner 7₆ can transmit such data to the computer 3 via the computer 87 and network 11. The computer 3 stores the event data 31₆ in association with package identification data 27 in the data storage unit 5.

The package 13 containing products 21 can be stored on a long-term or short-term basis in the distribution hub 85, as desired by the sender and/or receiver of the package. At the appropriate time, as may be determined by the sender 15 and/or the receiver 17, the package 13 is picked up by worker 89 and/or vehicle 91 at the hub facility 85 for delivery to the receiver 17. As the worker 89 and/or vehicle 91 transporting package 13₁ exits the hub facility 85, the package passes through portal 9₇ associated with the exit of such hub facility. The scanner 7₇ scans and transmits the package identification data 27₁ to the computer 3 via the networks 67, 11. Alternatively, the computer 87 associated with the distribution hub 85 can be connected to receive some or all of this data from the scanner 7₇, and can also be connected to transmit same to the computer 3 via the network 11. In addition to the package identification data 27₁, the scanner 7₇ and/or computer 87 can generate and transmit event data 31₇ to the computer 3. Alternatively, the computer 3 can generate or retrieve the event data 31₇ from the unit 5 based upon identification or address data that uniquely identifies the scanner 7₇ and/or computer 87. Such data can be transmitted from the scanner 7₇ and/or computer 87 to the computer 3 along with the package identification data 27₁. The computer 3 can be programmed to recognize that the data identifying the scanner 7₇ and/or computer 87 is associated with a particular event or portal, namely, event data 31₇ and portal 9₇. The computer 3 can then retrieve corresponding event data 31₇ from the data storage unit 5 based on the identity or address of the scanner 7₇ and/or computer 87, or may simply be programmed to recognize such data as associated with the corresponding event data 31₇. Regardless of how it is generated or determined, the event data 31₇ can include alphanumeric data describing the event, for example, "package exited receive distribution hub," along with the date and time of the event indicated by timestamp generated by either the computer 3, the scanner 7₇, or the computer 87 of the hub facility 85.

The worker 89 and/or short-haul vehicle 91 transports the package 13₁ containing products 21₁₁, 21₁₂ through the last portal 9₈ signifying delivery to the receiver 17. The worker 89 scans the package identification data 27₁ with hand-held scanner 7₈. Alternatively, when the worker 89 extracts the package 13₁ from the hold of vehicle 91, a scanner 7₈ mounted on the vehicle can scan the package identification data 27 from the shipping label 25 of the package. The scanned package identification data 27, optionally with event data 31₈ generated by the scanner or entered by the worker 89 into the scanner with its keypad, is transmitted to the computer 3 preferably wirelessly via network 11 for storage in the data storage unit 5. Alternatively, the computer 3 can generate or retrieve the event data 31₈ from some other data received from the scanner 7₈. This data could be such as to identify the scanner or an address associated therewith, such as the source or logical address inherent in many data transmission protocols. The computer 3 stores the received event data 31₈ in association with the package identification data 27₁ in the data storage unit 5. The process is completed by delivery of the package 13₁ to the receiver 17.

Upon completion of the package delivery process, the database 29 of the database storage unit 5 contains a complete record of the events related to the package transported through the carrier's logistics network. More specifically, the database 29 comprises event data 31₁ - 31₈ stored in association with package identification data 27. In addition, because the object identification data 23₁₁,23₁₂ is stored in linked association with the package identification data 27₁, the status of respective objects 20 at any point in time while progressing through the carrier's logistics network can be determined by the sender 15 accessing the carrier computer system 2 using its own computer system 49.

The computer 3 can be programmed to upload data contained in the database 29 to computer system 93 so that such data can be accessed by others besides the carrier 19. More specifically, the computer 3 can retrieve data indicating the network address of the computer 95. The computer 3 can be programmed to retrieve this network address periodically or after receiving event data 31 from a scanner 7 pertaining to the product 21. The computer 3 transmits the object identification data 23 using the network address to the computer system 93 along with corresponding event data 31₁ - 31₈ to the computer system 93. The computer system 93 comprises computer 95 and data storage unit 97. The computer 95 receives the object identification data 23 and retrieves a corresponding network address from the data storage unit 93. The computer 95 next uploads the object identification data 23 and corresponding event data 31₁ - 31₈ to the computer system 99. The computer system 99 comprises a computer 101 and data storage unit 103. The computer 99 is programmed to receive the object identification data 23₁₁ , 23₁₂ and corresponding event data 31₁- 31₈ , and to store this data in the unit 103 so that it can be accessed by others interested in the product 31. Prior to storage, the computer 101 can tag this data using eXtensible Mark-up Language (XML) tags or the like to permit the data to be recognized by different kinds of computer systems and applications that can used by entities interested in the object 20 to access the data.

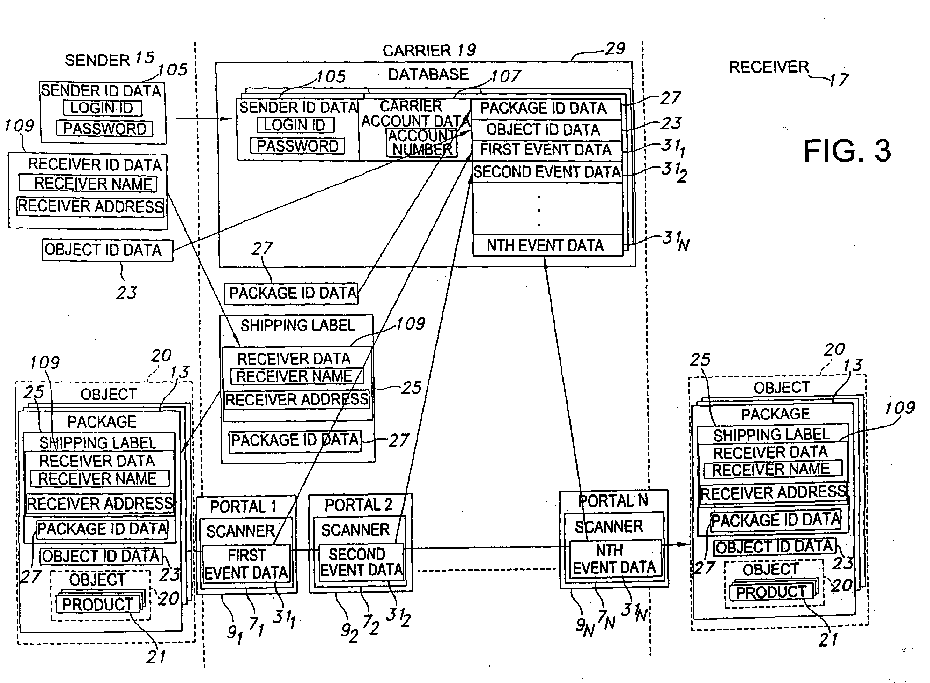

In FIG. 3 a data flow diagram in accordance with one embodiment of the invention is shown. The flow diagram of FIG. 3 is based on the UPSCampusShip™ or UPSInternet™ browser-accessible website services for shipping packages, which can be implemented with the computers 3, 53 and the data storage unit 5 of FIG. 2. The sender 15 uses a web browser executing on the computer 53 to enter sender identification data 105 and transmit same to the computer 3. The sender identification data 105 can comprise a login ID or username and password. The computer 3 references the database 29 using the sender identification data 105, and determines corresponding carrier account data 107 based thereon. The carrier account data 107 can comprise an account number that uniquely identifies an account of the sender 15 under which it is desired to track package shipments. The account number can also be used by the carrier 19 to bill for package shipments and/or storage. The sender uses the computer 53 to enter and transmit receiver data 109 to the carrier 19. The receiver data 109 can comprises receive name and address data. The carrier computer 3 receives this data and generates package identification data 27 uniquely identifying the package 13 that the sender 15 desires to ship. The carrier computer 3 generates an electronic or "soft" shipping label 25 including receiver data 109 and package identification data 27. The carrier computer 3 downloads the shipping label 25 to the sender's computer 53. The sender transmits object identification data 23 indicating the product 21 in the package 13, to the carrier computer 3 via the network 11. The carrier computer 3 stores the object identification data 23 in association with the package identification data 27 in the data storage unit 5.

The sender 15 prints and attaches the shipping label 25 to the package 13 and provides same to the carrier 19. As the package 13 progresses through the carrier's transport and storage logistics network, the package 13 is scanned by scanners 7₁, 7₂, ..., 7_{N} as it passes through respective portals 9₁, 9₂, ..., 9_{N}. The scanners 7₁, 7₂, ..., 7_{N} report the package identification data 27 and optionally also respective event data 31₁, 31₂, ..., 31_{N} to the computer 3. Alternatively, the computer 3 can be programmed to determine the event data 31₁, 31₂, ..., 31_{N} by identification or address data indicating the specific one of the scanners 7₁, 7₂, ..., 7_{N} reporting the package identification data 27. The computer 3 stores the event data 31₁, 31₂, ..., 31_{N} in association with the package identification data 27 in the database 29. Because the object identification data 23 is linked to the package identification data 27, the event data 31 related to the package 13 can be readily determined.

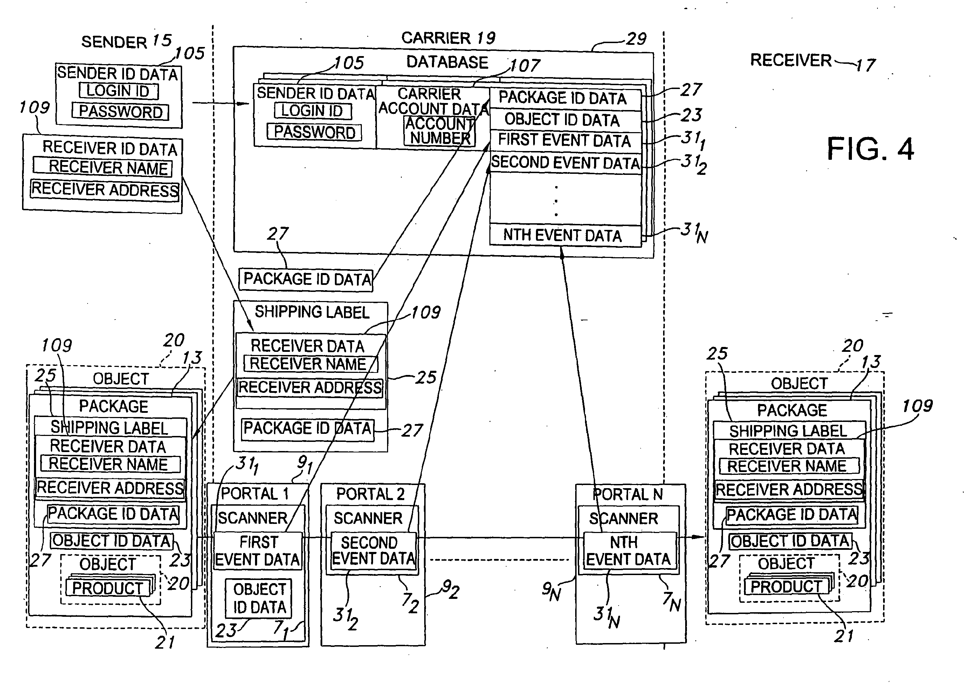

FIG. 4 is similar in nearly all respects to FIG. 3 except that the association between the object identification data 23 and package identification data 27 is not provided by the sender 15, but instead is provided by a scanner 7, preferably scanner 7₁ since this is the first scanner to encounter the product 21 as it is transported by the carrier 19 to the receiver 17. The computer 3 receives the object identification data 23 and package identification data 27 and stores them in association with one another in the data storage unit 5, along with the event data 31₁, 31₂, ..., 31_{N} as it is generated by respective scanners 7₁, 7₂, ..., 7_{N} as the package 13 and its contained product 21 transit through the portals 9₁, 9₂, ..., 9_{N} to the receiver 17.

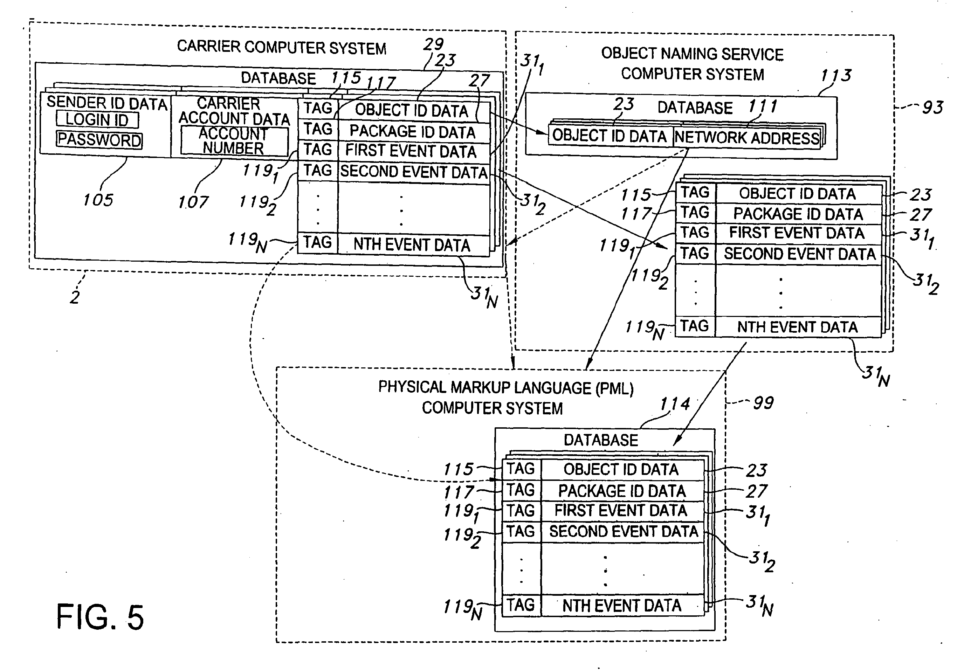

FIG. 5 shows a more detailed data flow implemented by the computer systems 2, 93, 99. The carrier computer system 2 stores database 29 having sender identification data 105 related to carrier account data 107, which in turn is related to sets of object identification data 27 linked to respective package identification data 23. The package identification data 23 is associated with event data 31 related to events pertaining to the corresponding object 20 which in this example is associated with the package 13 containing the products 21. The carrier computer system 2 can also associate tags 115, 117, and 119₁ - 119_{N} with respective object identification data 23, package identification data 27, and event data 31₁ - 31_{N} so that it can be read and interpreted by other computer systems according to standard meanings adopted for such tags among the entities using the data, even though such computer systems may use business applications with different data formats and protocols. The computer system 2 transmits the object identification data 27 to the computer system 93. In this example, the computer system 93 is referred to as an "object naming service" due to its similarity in function to "domain name service" or DNS, an Internet service that translates a domain name address into an IP address. The computer system 93 functions to receive the object identification data 27 and retrieves a corresponding network address 111 of the computer 101 within the computer system 93 that contains data corresponding to the product identified by the product identification data 27. In addition to the object identification data 27, the computer system 2 can also transmit the package identification data 23 and event data 31₁ - 31_{N} to the computer system 93, along with the tags 115, 117, and 119₁ - 119_{N}. The computer system 93 uses the network address 111 to access the computer system 99 and transmits the object identification data 27 and corresponding package identification data 23 and event data 31₁ - 31_{N}, along with corresponding tags 115, 117, and 119₁ - 119_{N}, to the physical mark-up language (PML) computer system 99. The computer system 99 stores such data and their tags in the database 114. The tags 115, 117, and 119₁ - 119_{N} can be standardized amongst any or all of the sender 15, receiver 17, and carrier 19, and possibly other entities involved with the product who are authorized by the sender and/or receiver to view the tagged data. The tags 115, 117, and 119₁ - 119_{N} can be used by computer systems of the sender, receiver, carrier, and/or other authorized entities, to permit the corresponding data 27, 23, 31₁ - 31_{N} to be used in business applications executed by such systems. For example, these business applications can include inventory management software, customer billing software, procurement software, and other software used by businesses operating the computer systems.

Alternatively, as opposed to the computer system 93 receiving the object identification data 27, package identification data 23, and event data 31₁ - 31_{N} from the carrier computer system 2 and transmitting same to the PCL computer system 99 for storage, the ONS computer system 93 can operate in the following manner. Upon receiving the object identification data 27 from the carrier computer system 2, the ONS computer system 93 retrieves a corresponding network address 111 from the database 113 and transmits same back to the carrier computer system 2. The carrier computer system 2 then uses the received network address 111 to transmit corresponding object identification data 23, package identification data 27, event data 31₁ - 31_{N} , and respective tags 115, 117, and 119₁ - 119_{N} to the PML computer system 99. The PML computer system 99 receives the tagged object identification data 23, package identification data 27, and event data 31₁ - 31_{N}, and stores same in the database 114. Through the use of the tags 115, 117, and 119₁ - 119_{N}, the object identification data 27, package identification data 23, and event data 31₁ - 31_{N} can be read and interpreted by business applications of computer systems authorized to access such data.

The tags 115, 117, and 119₁ - 119_{N} can be in XML format, as shown in Table 2.

**Table 2. XML Data Tags**

| Tag | Tagged Data | |
|---|---|---|
| 115 | <product_id_data>F127.C238.DF1B.17CC</product_id_data> | |
| 117 | <package_id_data>1ZE263730197073389</package_id_data> | |
| 119₁ | <event_ 1> <description>package pick up</description> | |
| | | <location>service center 5 - Atlanta, Georgia</location> |
| | | <date_time>02.28.2003 - 11:14AM</date_time> |
| | </event_1> | |
| • | | • |
| • | | • |
| • | | • |
| 119_{N} | <event_N> <description>package delivered</description> | |
| | | <location>Harry Jones, 504 Windy Way, Seattle, Washington 98101</location> |
| | | <date_time>3.1.2003 - 10:02AM</date_time> |
| | </event_N> | |

Thus, the tags <product_id_data> </product_id_data> indicate that the data "F127.C238.DF1B.17CC" is object identification data 27; the tags <package_id_data> </package_id_data> indicate that the alphanumeric character string "1ZE263730197073389" is package identification data 23; the tags <event_1> </event_1> indicate that the data between the tags is first event data 119₁ , and the tags <description> </description> indicate that the character string "package pick up" is a description of the first event, tags <location> </location> indicate that "service center 5 - Atlanta, Georgia" is a location at which the first event occurred, and the tags <date_time> </date_time> associated with "02.28.2003 - 11:14AM" indicate the date and time on which the event occurred. Similarly, the tags <event_N> </event_N> indicate that the data between these tags is associated with the Nth event related to the package 13, the <description> </description> tags indicate that the character string "package delivered" is a description of the Nth event, the tags <location> </location> indicate that the alphanumeric character string "Harry Jones, 504 Windy Way, Seattle, Washington 98101" is the location at which the Nth event occurred, and the tags <date_time> </date_time> indicate that the alphanumeric character string "3.1.2003 - 10:02AM" is a date and time at which the event occurred. If the business applications of computer systems are programmed to recognize the tags 115, 117, 119₁- 119_{N} , then they can retrieve and process the corresponding tagged data 27, 23, 31₁- 31_{N} for use in such applications. Thus, the tags permit the data to be accessed and used by such business applications for improved operation of businesses involved with the product 13.

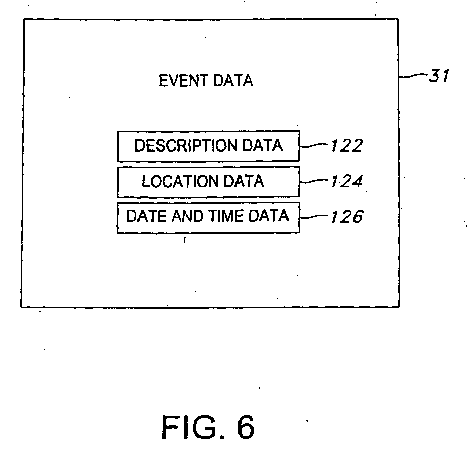

FIG. 6 shows the event data 31 which can comprise description data 122, location data 124, date and time data 126, and possibly other data. Hence, when referenced in the FIGs., it will be understood that the event data 31₁, ..., 31_{N} can comprise one or more of corresponding description data 122₁ , ..., 122_{N} , location data 124₁, ..., 124_{N} , and date and time data 126₁, ..., 126_{N} .

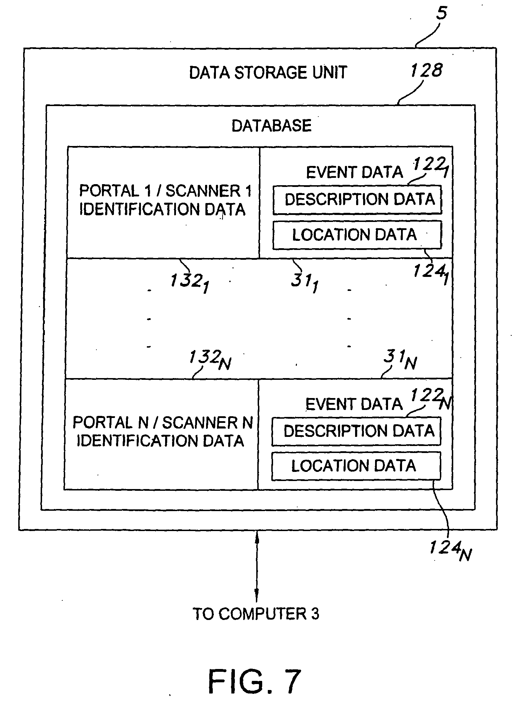

FIG. 7 shows the data storage unit 5 storing database 128 with a look-up table 130 with scanner identification data 132₁ , ... , 132_{N} , which can be a source number or address uniquely identifying the scanners 7₁ , ..., 7_{N} and/or portals 9₁, ... , 9_{N}. The identification data 132₁, ... , 132_{N} is associated with corresponding event data 31₁ , ... , 31_{N}. The event data 31₁, ... , 31_{N} comprises description data 122₁, ... , 122_{N} which describes the nature of the event, and location data 124₁ , ... , 124_{N} describing where the event occurred. When the scanners 7₁, ..., 7_{N} of portals 9₁, ... , 9_{N} report respective package identification data 27 in response to the package 13 passing through the corresponding portal 9₁, ... , 9_{N}, the scanner or computer associated with the such portal reports the identification data 132₁ , ... , 132_{N} to the computer 3 of the carrier computer system 2. The computer 3 can reference the data storage unit 5 by using the identification data 132₁, ... , 132_{N} to obtain corresponding event data 31₁ , ... , 31_{N}. Because the portals 9₁, ... , 9_{N} are in this example associated with events that are always the same for such portals, the computer 3 can use the look-up table 130 to retrieve description data 122 describing the nature of the event, and location data 124 describing where the event occurred. Thus, certain event data 31 need not be provided by the scanners and/or computers reporting the event, which lessens the amount of bandwidth required to handle the associated data traffic.

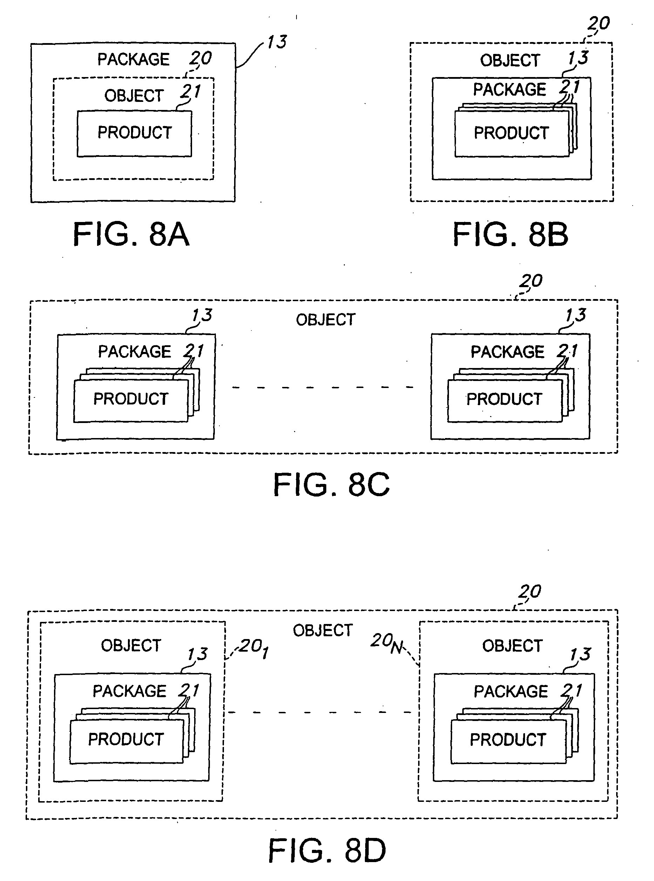

It should be appreciated that the relationship between the package 13, object 20, and product 21, must be established. This relationship can be established as: (1) the object 20 directly relates to an individual product 21 within a package 13, as shown in FIG. 8A; (2) the object 20 relates to a package 13 containing more than one product 21, as shown in FIG. 8B; and (3) the object 20 relates to multiple packages 13 containing products 21, such as a palate or lot, as shown in FIG. 8C. As shown in FIG. 8D, the object 20 can be a parent containing child objects 20₁, ..., 20_{N}. In the example of FIG. 8D, the parent object 20 can be a group of child objects 20₁, ..., 20_{N}, and the child objects 20₁, ..., 20_{N} can each relate to respective packages 13 with contained products 21. Numerous other combinations, arrangements, and relations between the package(s) 13, object(s) 20, and product(s) 21 may occur to those of ordinary skill in the art, and such are considered within the scope of this disclosure. Normally, the sender 15 establishes how the object 20 relates to the product 21. But this does not preclude others who may be involved with the product 21 from using their own objects to reference the product. The object 20 is tagged with corresponding object identification data 21 and the package 13 is tagged with corresponding package identification data 27. The next step is to provide the data to the carrier computer system 2 so that it can be linked to enable the sender to track the object.

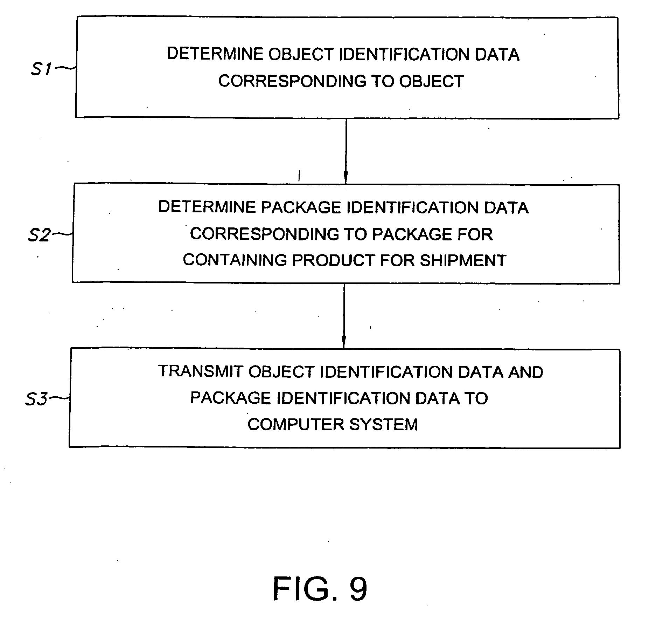

FIG. 9 is a method that can be performed by the computer system 49 and/or person 51 of the sender 15. In Step S1, the computer system 49 and/or person 51 determines object identification data 23 related to an object 20 associated with a product 21. This can be done with a scanner or by reading the object identification data 23 affixed to the object 20. In Step S2 the computer system 49 and/or person 51 reads the package identification data 27 from the shipping label 25 associated with the object 20. The package identification data 27 can be read by eye sight or scanned with a scanner at the sender's location. In Step S3 the person 51 operates the computer system 49 to transmit the object identification data 23 and the package identification data 27 to the carrier computer system 2. The system 2 thus obtains the object identification data 23 and package identification data 27 for linkage to relate the object 20 to the package 13 with product 21.

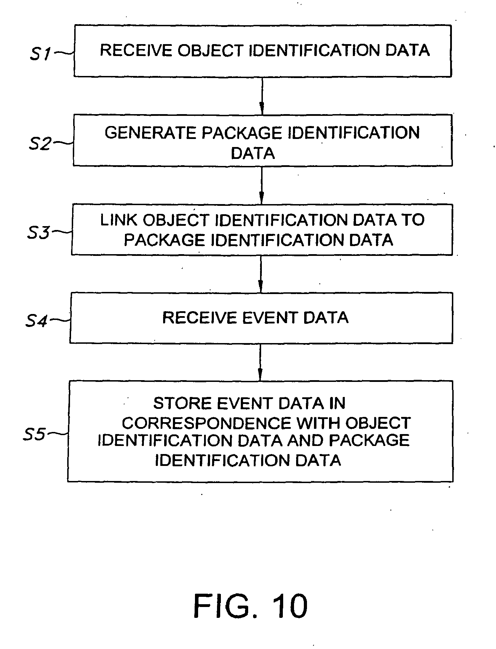

FIG. 10 is a flowchart of a general method of the invention. This method can be performed by the carrier computer system 2, or more specifically, the computer 3 with data storage unit 5. In step S1 object identification data 23 is received. It can be received by the carrier computer system 2 from the sender computer system 49, or from a scanner 7 at a portal 9. In Step S2 the package identification data 27 is generated. This is an optional step and can be performed by the carrier computer system, or it can be provided by sender computer system 49 operated by person 41 from a pre-printed shipping label 25. In Step S3 the object identification data 23 is linked to package identification data 27. This data linkage can be stored as a record or linked data in the database 29 of the unit 5 by the computer 3. In Step S4 event data is received. This step can be performed by the computer 3 which receives event data 31 from the scanner(s) 7 as the package 13 containing product 21 progresses through the portals 9₁, ..., 9N of the transport and storage network 18 of the carrier 19. In Step S5 event data 31 is stored in association with the object identification data 23 and the package identification data 27. This step can be performed by the computer 3 storing the event data 31 in association with the object identification data 23 and the package identification data 27 in the data storage unit 5.

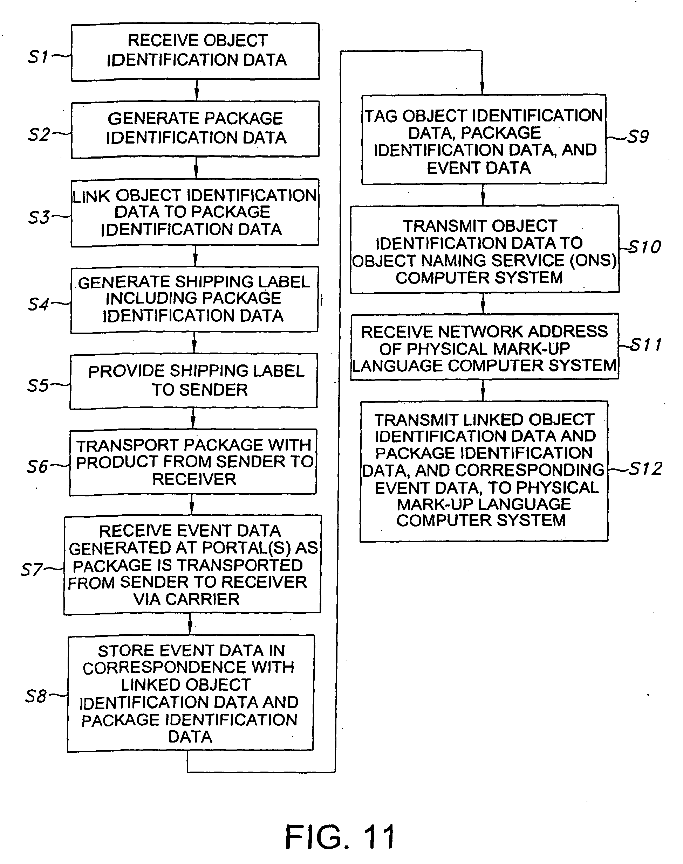

FIG. 11 is a flowchart of a method that can be performed by the computer systems 2, 49, 93, 99 in accordance with the invention. In Step S 1 the carrier computer system 2 receives object identification data 27. In Step S2 the carrier computer system 2 generates package identification data 23. In Step S3 the carrier computer system 2 links the object identification data 27 and package identification data 23 by storing same in association with one another in the database 29. In Step S4 the computer system 2 generates the shipping label 25 including package identification data 27, and in Step S5 provides such shipping label 25 to the sender 15. This can be done by transmission of the shipping label in "soft", i.e., electronic or optical form, from the carrier computer system 2 to the sender computer system 49. In Step S6 the carrier 19 transports the package 13 from the sender 15 to the receiver 17. In Step S7, as the package 13 is transported, the computer system 2 receives event data 31 from the scanner(s) 7 of respective portal(s) 9 through which the package transits. In Step S8, the computer 3 stores event data 31 in correspondence with the linked production identification data 13 and the package identification data 27. In Step S9, the computer 3 tags the object identification data, package identification data, and event data. In Step S10 the computer system 2 transmits the object identification data 27 to the ONS computer system 93. In Step S11 the carrier computer system 2 receives the network address 111 corresponding to the PML computer system 99. In Step S 12 the carrier computer system transmits the linked and tagged object identification data 23 and package identification data 23, along with corresponding event data 31, to the PML computer system 99.

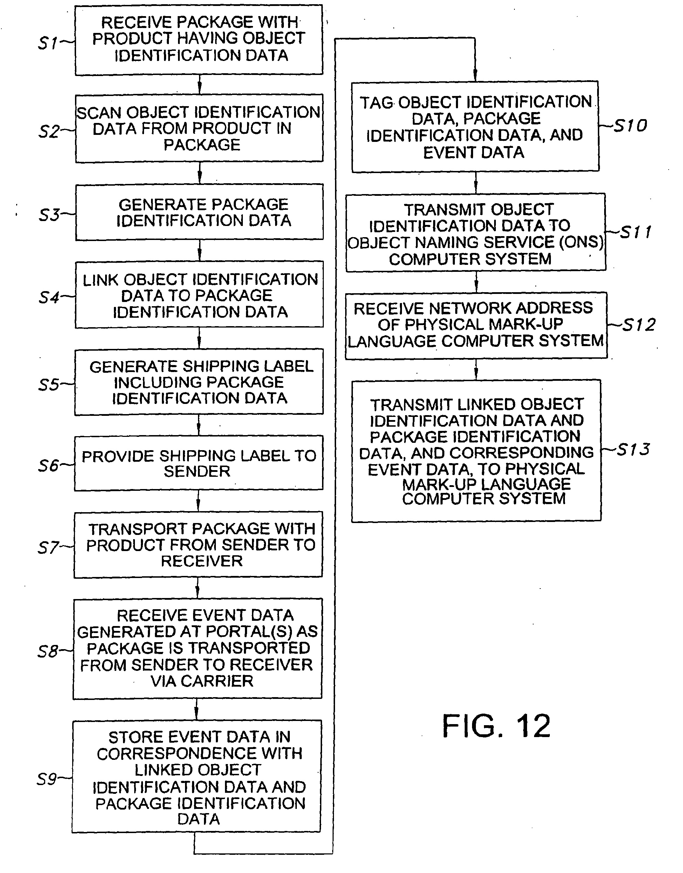

In FIG. 12, an alternative method similar to the method of FIG. 11, is shown, but with the following differences. In Step S1 the carrier 19 receives the package 13 containing a product 21, with object identification data 23. In Step S2, object identification data 23 is scanned from the object 20, which is package 13 in this example. This can be done with an electro-magnetic scanner that does not require line-of-sight to scan the object identification data 23 affixed to the package 13 with the product 21. Steps S3-S13 mirror Steps S2-S12, so further description of these steps is omitted as redundant to the description of the method steps already herein provided.

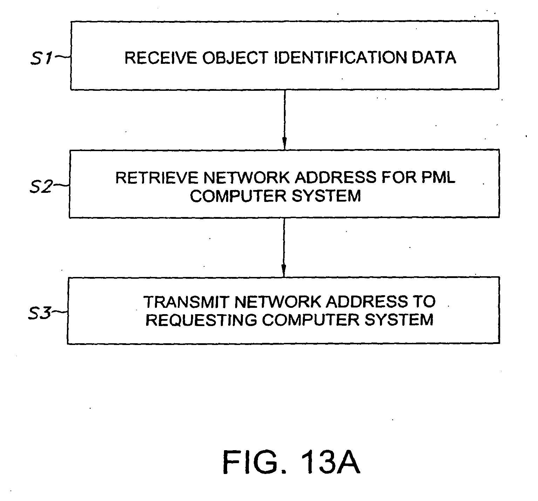

FIG. 13A is a method performed by the ONS computer system 93. In Step S1 the ONS computer system 92 receives object identification data 23 from a requesting computer system indicating a request for accessing data associated with the product 13 that is stored in the PML computer system 99. In Step S2 the ONS computer system 93 retrieves a network address 111 for the PML computer 101. In Step S3 the ONS computer system 93 transmits the network address 111 to the requesting computer system. The ONS computer system 93 can be programmed to only provide such data in the event that the requesting computer system is authorized to access such network address. This can be done on the basis of user name and password, authentication of the requesting entity or computer system, use of encryption keys recognized by the ONS computer system 93, and numerous other methods well-known in the art.

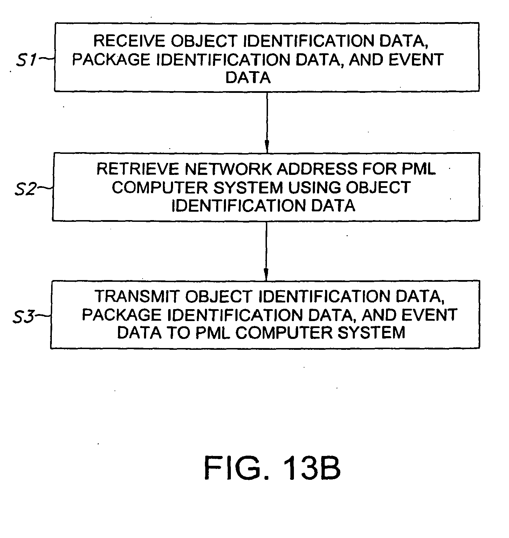

FIG. 13B is an alternative method performed by the ONS computer system 93. In Step S1 the ONS computer system 93 receives object identification data 23, package identification data 27, and event data 31 from another computer system. In Step S2 ONS computer system 93 retrieves the network address 111 corresponding to the PML computer system 99. In Step S3 the computer system 93 uses the network address 111 to transmit the object identification data 23, the package identification data 27, and the event data 31 to the PML computer system 99.

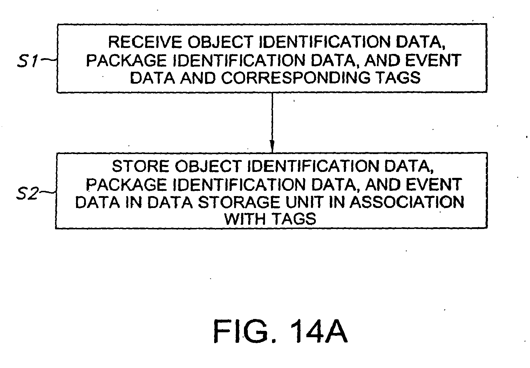

FIG. 14A is a method performed by the PML computer system 99. In Step S1 the PML computer system 99 receives tagged object identification data 23, package identification data 27, and event data 31. In Step S2 the PML computer system 99 stores the object identification data 23, package identification data 27, and event data 31 in correspondence with respective tags 115, 117, and 119₁ - 119_{N}.

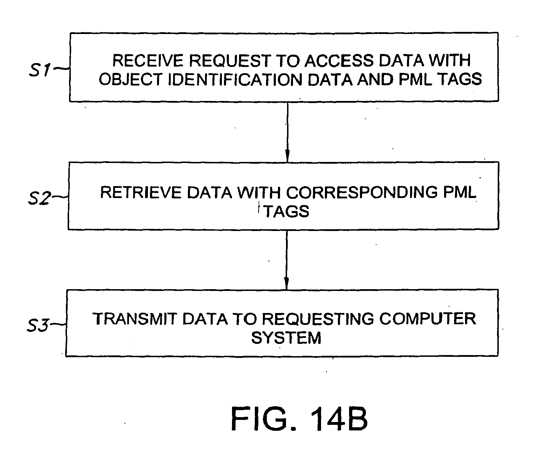

FIG. 14B is a method performed by the PML computer system 99. In Step S1 the PML computer system 99 receives a request from another computer system requesting access to data. The request contains object identification data 23 identifying the object 20, which in this is the package 13, for which the request is made, in addition to one or more tags 115, 117, and 119₁ - 119_{N} indicating the type of data requested. The PML computer system 99 can be programmed to determine whether the requesting computer system 99 is authorized to access such data, e.g., by determining the user or computer system and whether such entity is authorized to access the data based on pre-stored authorization data, by determining whether the requestor has an appropriate key, etc. Assuming the requestor is authorized to access such data, in Step S2 the PML computer system 99 uses the tags 115, 117, and/or 119₁ - 119_{N} submitted with the request to retrieve corresponding object identification data 23, package identification data 27, and event data 31. In Step S3 the PML computer system 99 transmits the requested object identification data 23, package identification data 27, and event data 31 to the requesting computer system.

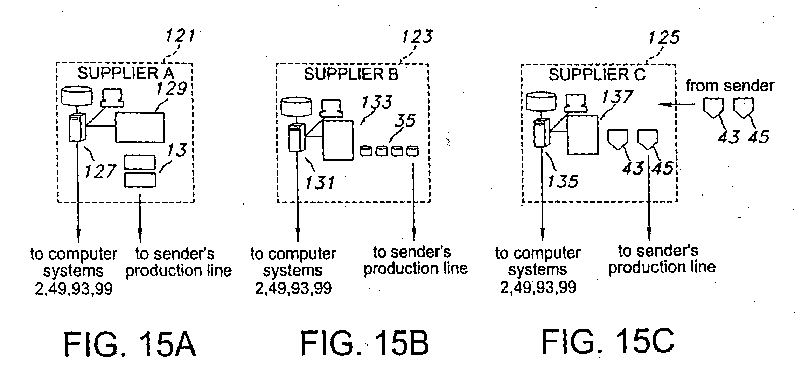

FIG. 15 shows an example of how suppliers 121, 123, 125 can benefit from obtaining access to the object identification data 23, package identification data 23, and event data 31. Supplier 121 supplies sender 15 with boxes or packages 13 needed by the sender to store and transport the product 21 to the receiver 17. The supplier computer system 127 can be connected to the computer systems 49, 93 and/or 99 to receive the tagged object identification data 23, package identification data 23, and event data 31. Computer system 127 can be connected to a machine 129 that makes boxes or packages 13 for the sender's products. A business application running on computer system 127 can use the tagged data to assist the supplier 121 in making sound decisions regarding how many package boxes 13 to manufacture, when to manufacture such boxes, when to order materials for manufacture of the boxes, and any other things dependent thereon. Thus, access to data as to the status of products 21 at the sender's location as well as within the carrier transport and storage network 18 assists the supplier 121 in properly operating its business.

The same is true of the supplier 123 which in this example manufactures containers 21 used by the sender 15 to contain its product 21. The computer system 131 of the supplier 123 can be connected to any or all of the computer systems 49, 93 and/or 99 to receive the tagged object identification data 23, package identification data 23, and event data 31. Supplier 123 can thus produce the containers 35 using machine 133 at a rate determined by a business application executed on the computer system 131.

Similarly, the supplier 125 manufactures ingredients or materials 43, 45 for making product 13. The computer system 135 of the supplier 125 can be connected to any or all of the computer systems 49, 93 and/or 99 to receive the tagged object identification data 23, package identification data 23, and event data 31. A business application executed on computer system 135 of the supplier 125 can be used to determine when and/or at what rate the ingredients or materials 43, 45 should be manufactured based on the tagged data. In addition, the supplier 125 can determine how many containers for the materials 43, 45 are being recycled or returned for use in determining the number of containers it needs to order.

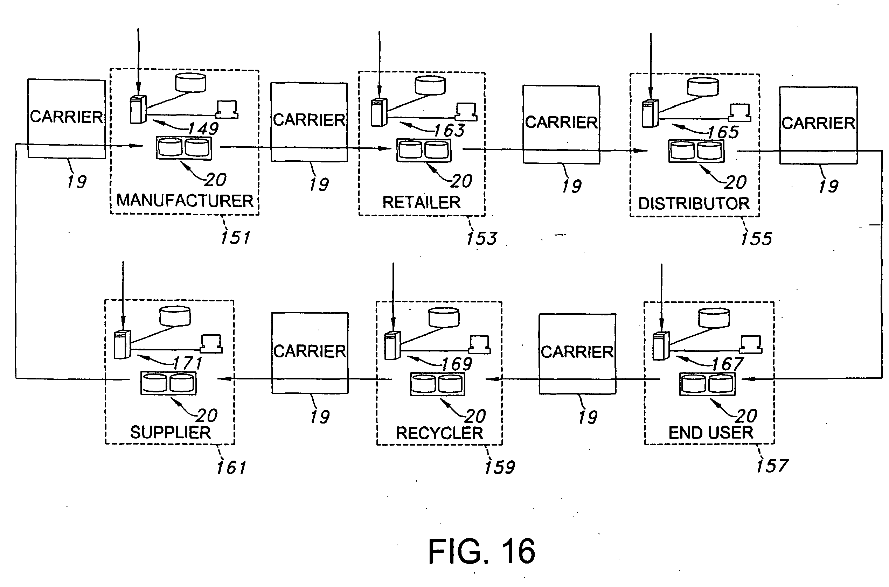

As shown in FIG. 16 it should be appreciated that the specific embodiment disclosed herein in which the sender 15 is a manufacturer of product 21, is but one example of a possible sender involved with a product. As shown in FIG. 13 the sender 15 and receiver 17 can be any two entities including manufacturer 151, retailer 153, distributor 155, end user 157, recycler 159, and supplier 161 associated with the product 13. The respective computer systems 149, 163, 165, 167, 169, 171 can be connected to one or more of the computer systems 2, 49, 93, 99 of FIG. 2 to receive tagged object identification data 23, package identification data 27, and/or event data 31 for use in operating their respective businesses.

Although the invention has been described herein with reference to specific embodiments and examples, it is not necessarily intended to limit the scope of the invention to the specific embodiments and examples disclosed. Thus, in addition to claiming the subject matter literally as defined in the appended claims, all modifications, alterations, and equivalents to which the applicant is entitled by law, are herein expressly reserved by the following claims.

## Claims

1. A system (1) **characterized by**:
a carrier computer system (2) receiving object identification data (23) identifying an object (20) related to one or more products (21) contained by at least one package (13), the object (20) variably defined by a sender (15) of the product (21) to identify either the product (21), the package (13) containing the product (21), or a group of packages (13) containing products (21), as specified by the sender (15), the carrier computer system (2) obtaining and storing package identification data (27) identifying the package (13) containing the product (21), in association with the object identification data (23) received from the sender (13) and corresponding event data (31₁ - 31_{N}) generated by respective scanners (7) as the carrier (19) transports the object (20) via the package (13) from the sender (15) to a receiver (17) through a plurality of portals (9) of the carrier's transport and storage network (18); and
a second computer system (93) connected to communicate with the carrier computer system (2) via network (11), the carrier computer system (2) transmitting the object identification data (23) to the second computer system (93) via the network (11), the second computer system (93) using the object identification data (23) received from the carrier computer system (2) to determine a network address (111) of a third computer system (99), the second computer system (93) optionally transmitting the network address (111) to the carrier computer system (3), the carrier computer system (2) tagging the object identification data (23), the package identification data (27) and corresponding event data (31₁ - 31_{N}), the carrier computer system (2) optionally transmitting the tagged object identification data (23), tagged package identification data (27) and corresponding tagged event data (31₁ - 31_{N}) to the second computer system (93), either the carrier computer system (2) or the second computer system (93) using the network address (111) to transmit the tagged object identification data (23), tagged package identification data (27) and corresponding tagged event data (31₁ - 31_{N}) via network (11) to the third computer system (99) for storage and access.

2. A carrier computer system (2) as claimed in claim 1 wherein the object (20) is the product (21) itself.

3. A carrier computer system (2) as claimed in claim 1 wherein the object (20) is the package (13).

4. A carrier computer system (2) as claimed in claim 1 wherein the object (20) is a group of packages (13).

5. A carrier computer system (2) as claimed in claim 1 wherein the object (20) is a parent (20) containing at least one child object (20₁ - 20_{N}) identified by respective object identification data (23).

6. A carrier computer system (2) as claimed in claim 1 wherein the object identification data (23) comprises at least one electronic product code (EPC).

7. A carrier computer system (2) as claimed in claim 6 wherein the EPC code of the object identification data (23) is programmed into a radio-frequency identification (RFID) tag attached to the object (20).

8. A carrier computer system (2) as claimed in claim 1 wherein the carrier computer system receives and stores event data (31) indicating an event related to the package (13), in association with the package identification data (27).

9. A carrier computer system (2) as claimed in claim 8 wherein the event data (31) comprises description data (122) describing the event associated with the event data (31).

10. A carrier computer system (2) as claimed in claim 9 wherein the description of the event comprises at least one of "package pick up," "package received at pickup distribution hub," "package exited pickup distribution hub," "package on long-haul transport," "package off long-haul transport," "package arrived at receive distribution hub," "package exited receive distribution hub," and "package delivered."

11. A carrier computer system (2) as claimed in claim 8 wherein the event data (31) comprises location data (124) indicating a location at which the event occurred.

12. A carrier computer system (2) as claimed in claim 11 wherein the location includes at least one of a drop location, carrier store, service center, pickup vehicle, sender's location, package intake of send distribution hub, package outlet of send distribution hub, package inlet to long-haul transport, package outlet to long-haul transport, package intake of receive distribution hub, package outlet of receive distribution hub, and receiver's location.

13. A carrier computer system (2) as claimed in claim 8 wherein the event data (31) comprises data (126) indicating the date and time on which the event occurred.

14. A carrier computer system (2) as claimed in claim 8 wherein the carrier computer system receives the object identification data (23) and package identification data (27) from a computer (55) of the sender (15) via a communication network (11).

15. A carrier computer system (2) as claimed in claim 8 wherein the carrier computer system receives the object identification data (23) from a computer (55) of the sender (15) via a communication network (11), and the package identification data (27) from at least one scanner (7) in the carrier's transport and storage network (18).

16. A carrier computer system (2) as claimed in claim 8 wherein the carrier computer systems receives the object identification data (23) and the package identification data (27) from at least one scanner (7) in the carrier's transport and storage network (18).

17. A carrier computer system (2) as claimed in claim 8 wherein the carrier computer system generates the package identification data (27) and transmits same to a computer (55) of the sender (15) for printing a label (25) bearing the package identification data (27) for attachment to the package (13).

18. A carrier computer system (2) as claimed in claim 8 wherein the carrier computer system receives the event data (31) from at least one scanner (7) in the carrier's transport and storage network (18).

19. A carrier computer system (2) **characterized by** receiving object identification data (23) identifying an object (20) directly or indirectly associated with a product (21) as defined by the sender (15) of the package (13), the object (20) defined by the sender (15) as either the product (21), the package (13) containing the product (21), or a group of packages (13) containing products (21), obtaining package identification data (27) identifying a package (13) in which the product is shipped, linking object identification data (23) to the package identification data (27), generating a shipping label (25) including the package identification data (27), providing the shipping label (25) to a sender (15) of the package (13) for attachment to the package (13), the package (13) received by the carrier's transport and storage network (18) and transported from the sender to a receiver (17), the carrier computer system (2) further receiving event data (31) generated at one or more portals (9) of the carrier's transport and storage network (18) as the package (13) is transported from the sender (15) to receiver (17), and storing the event data (31) in correspondence with the linked object identification data (23) and package identification data (27).

20. A carrier computer system (2) as claimed in claim 19 wherein the object (20) is the product (21).

21. A carrier computer system (2) as claimed in claim 19 wherein the object (20) is the package (13).

22. A carrier computer system (2) as claimed in claim 19 wherein the object (20) is a group of packages (13).

23. A carrier computer system as claimed in claim 19 wherein the object (20) can be variably defined by a sender (15) of the product (21) to identify either the product, the package (13) containing the product, or a group of packages containing products as specified by a sender of the product.

24. A carrier computer system (2) as claimed in claim 19 wherein the object (20) is a parent that comprises at least one child object identified by respective object identification data (23).

25. A carrier computer system (2) as claimed in claim 19 wherein the object identification data (23) is received from the computer system (55) of the sender (15) of the package (13).

26. A carrier computer system (2) as claimed in claim 19 wherein the received object identification data (23) is generated by a scanner (7) of one of the portals (9).

27. A carrier computer system (2) as claimed in claim 19 wherein the package identification data (27) is obtained by receiving the package identification data from the computer system (55) of the sender (15) of the package (13).

28. A carrier computer system (2) as claimed in claim 19 wherein the package identification data (27) is obtained by generating the package identification data (27) with the carrier computer system (2).

29. A carrier computer system (2) as claimed in claim 19 wherein the carrier computer system tags at least one of the object identification data (23), package identification data (27), and event data (31).

30. A system (1) for transporting a package (13) from a sender (15) to a receiver (17) by a carrier (19), the system (1) **characterized by**:
a carrier computer system (2) comprising
a computer (3) connected to receive object identification data (23) from a computer system (55) of the sender (15) via a network (11), the object identification data (23) identifying an object (20) variably defined by the sender (15) of the package (13) as either a product (21) shipped in the package (13), a package (13) containing one or more products (21), or a group of packages (13) containing respective products (21);
a data storage unit (5) connected to the computer (3) and having a database (29) storing package identification data (27) and event data (31) in association with the object identification data (23), the object identification data (23), package identification data (27), and event data (31) received from the computer (3); and
a plurality of portals (9) each having a respective scanner (7) obtaining package identification data (27) identifying the package (13) by scanning the package (13) as it passes through the portal (9) in route from the sender (15) to the receiver (17), the portals (9) transmitting the package identification data (27) along with portal/scanner identification data (132), or both, to the computer (3);
the computer (3) generating the event data (31) based on the portal/scanner identification data (132), or both, in response to receiving package identification data (27) from the portals (9), the computer (3) storing the event data (31) in association with linked object identification data (23) and package identification data (27) in the database storage unit (5); and
a second computer system (93) connected to communicate with the computer (3) via network (11), the computer (3) transmitting the object identification data (23) to the second computer system (93), the second computer system (93) using the object identification data (23) received from the carrier computer system (2) to determine a network address (111) of a third computer system (99), the second computer system (93) optionally transmitting the network address (111) to the carrier computer system (3), the carrier computer system (2) tagging the object identification data (23), package identification data (27) and corresponding event data event data (31₁ - 31_{N}) and optionally providing the tagged object identification data (23), tagged package identification data (27) and corresponding tagged event data (31₁ - 31_{N}) to the second computer system (93), either the carrier computer system (2) or the second computer system (93) using the network address (111) to transmit the tagged object identification data (23), tagged package identification data (27) and corresponding tagged event data (31₁ - 31_{N}) via network (11) to the third computer system (99) for storage and access.

31. A system (1) as claimed in claim 30 wherein the object (20) is the product (21).

32. A system (1) as claimed in claim 30 wherein the object (20) is the package (13).

33. A system (1) as claimed in claim 30 wherein the object (20) is a group of packages (13).

34. A system (1) as claimed in claim 30 wherein the object (20) is a parent that contains at least one child object having respective object identification data (23).

35. A system (1) as claimed in claim 30 wherein the object identification data (23) and associated package identification data (27) are provided to the computer by the scanner (7) of the first portal (9) to encounter the package (13) as the carrier (18) transports the package (13) from sender (15) to receiver (17).

36. A system (1) as claimed in claim 30 wherein the scanner (7) comprises an optical scanner (7) that scans the package identification data (27) from a shipping label (25) attached to the package (13).

37. A system (1) as claimed in claim 36 wherein the package identification data (27) is in the form of a barcode scanned by the optical scanner (7).

38. A system (1) as claimed in claim 36 wherein the scanner (7) comprises an electromagnetic scanner scanning at least the object identification data (23) from the product (21) inside of the package (13).

39. A system (1) as claimed in claim 38 wherein the object identification data (23) is encoded in a radio frequency identification (RFID) tag scanned by the electromagnetic scanner (7).

40. A system (1) as claimed in claim 30 wherein the portal (9) is associated with an event related to the status of the package (13) in route from the sender (15) to the receiver (17) within the transport and storage network (18) of the carrier (19).

41. A system (1) as claimed in claim 30 wherein the portal (9) is located at one of a drop location, carrier store, service center, pickup vehicle, sender's location, package intake of send distribution hub, package outlet of send distribution hub, package inlet to long-haul transport, package outlet to long-haul transport, package intake of receive distribution hub, package outlet of receive distribution hub, and receiver's location.

42. A system (1) as claimed in claim 30 wherein the data storage unit (5) stores description data (122) associated with the event, and the computer (3) generates the description data (122) as part of the event data (31) describing the event by using the identity of at least one of the scanner (7) and portal (9) reporting the package identification data (27) to the computer (3).

43. A system (1) as claimed in claim 42 wherein the description data (122) comprises characters describing the event as at least one of "package pick up," "package received at pickup distribution hub," "package exited pickup distribution hub," "package on long-haul transport," "package off long-haul transport," "package arrived at receive distribution hub," "package exited receive distribution hub," and "package delivered."

44. A system (1) as claimed in claim 30 wherein the event data (31) comprises location data (124) indicating a location at which the event occurred.

45. A system (1) as claimed in claim 44 wherein the computer (3) determines the location at which the event occurred based on data (132) identifying at least one of the scanner (7) and portal (9) received by the computer (3) along with the package identification data (27).

46. A system (1) as claimed in claim 44 wherein the scanner (7) generates the location data (124) indicating a location at which the event corresponding to the event data (31) occurred, the location data (124) included with the package identification data (27) reported by the scanner (7).

47. A system (1) as claimed in claim 44 wherein the location includes at least one of a drop location, carrier store, service center, pickup vehicle, sender's location, package intake of send distribution hub, package outlet of send distribution hub, package inlet to long-haul transport, package outlet to long-haul transport, package intake of receive distribution hub, package outlet of receive distribution hub, and receiver's location.

48. A system (1) as claimed in claim 30 wherein the event data (31) comprises data (126) indicating the date and time at which the event occurred.

49. A system (1) as claimed in claim 48 wherein the computer (3) timestamps the received package identification data (27) from the scanner (7) with date and time data (126), and stores same in association with the package identification data (27) in the data storage unit (5).

50. A system (1) as claimed in claim 48 wherein the scanner (7) timestamps the package identification data (27) and transmits same to the computer (3) for storage in the data storage unit (5) as event data (31) associated with the package identification data (27).

51. A system (1) as claimed in claim 30 wherein the computer (3) tags at least one of the object identification data (23), package identification data (27), and event data (31) to permit such data to be read and interpreted by an external computer system.
